# EUROPÄISCHE PATENTSCHRIFT

(11) **EP 1 606 565 B1**
(45) Veröffentlichungstag und Bekanntmachung des Hinweises auf die Patenterteilung: **20.12.2006**
(21) Anmeldenummer: 04704203.1
(22) Anmeldetag: 22.01.2004
(51) Int. Cl.: F24J 2/20

(54) **ABSORBER FÜR EINEN THERMISCHEN KOLLEKTOR EINER SOLARANLAGE SOWIE VERFAHREN ZU DESSEN HERSTELLUNG**
ABSORBER FOR A THERMAL COLLECTOR OF A SOLAR SYSTEM AND METHOD FOR THE PRODUCTION THEREOF
ABSORBEUR DESTINE A UN COLLECTEUR DE CHALEUR D'UNE INSTALLATION SOLAIRE ET PROCEDE DE PRODUCTION DE CET ABSORBEUR

(30) Priorität: 19.02.2003 DE 10306930
(43) Veröffentlichungstag der Anmeldung: 21.12.2005
(73) Patentinhaber: Flamm AG, 52078 Aachen (DE)
(72) Erfinder: FLAMM, Frieder, 52223 Stolberg (DE)
(74) Vertreter: Kohlmann, Kai
(86) Internationale Anmeldenummer: PCT/EP2004/000474
(87) Internationale Veröffentlichungsnummer: WO 2004/074749

(56) Entgegenhaltungen:
- DE-A- 2 502 594
- DE-A- 2 622 008
- DE-A- 19 546 100
- US-A- 4 089 324
- US-A- 4 299 202
- US-A- 4 722 197
- US-A1- 2004 060 555

## Beschreibung

Die Erfindung betrifft einen Absorber für einen thermischen Kollektor einer Solaranlage mit einem Absorberflügel für die Licht- und Wärmeumwandlung sowie einem Rohrsystem für einen Wärmeträger, bei dem zwischen zwei aufeinanderliegenden, den Absorberflügel bildenden Blechen das Rohrsystem angeordnet ist, wobei in mindestens eines der Bleche der Verlauf des Rohrsystems eingebracht ist und die Bleche mittels eines klebstoffes miteinander verbunden sind.

Absorber sind Bestandteile von Solaranlagen. Solaranlagen bestehen grundsätzlich aus einer solaren Empfangsfläche, im allgemeinen als Kollektor bezeichnet, dem Solarkreislauf und dem Wärmespeicher. Die Kollektoren werden regelmäßig auf dem Dach eines Hauses montiert und wandeln die einfallende Sonnenstrahlung in Wärme um. Rohrleitungen, in denen ein Wärmeträger, z.B. ein Wasser-Glykol-Gemisch, im Kreis gepumpt wird, verbinden den Kollektor mit dem Wärmespeicher. Über eine Steuerung wird die Pumpe in den Solarkreislauf automatisch eingeschaltet, wenn ein Temperaturfühler signalisiert, dass die Temperatur am Kollektor höher als diejenige im Wärmespeicher ist. Im Wärmespeicher wird die Wärme des Wärmeträgers an das Speicherwasser abgegeben.

Im privaten Nutzungsbereich kommen insbesondere thermische Kollektoren zum Einsatz. Dies sind Kollektoren, die die einfallende Sonnenstrahlung absorbieren und unmittelbar in Wärme umwandeln. Hauptbestandteil jedes thermischen Kollektors ist der Absorber. Hierbei handelt es sich um eine metallische, teilweise auch aus Kunststoff bestehende, dunkel eingefärbte Platte. Da die Sonnenstrahlung vom Absorber nicht durchgelassen und auch kaum reflektiert wird, wandelt sie sich größtenteils in Wärme um, die über das mit dem Absorber verbundene Rohrsystem abfließt. In dem Rohrsystem befindet sich der Wärmeträger. Der Absorber mit dem dazugehörigen Rohrsystem befindet sich in einem wetterfesten Gehäuse mit einer Glasabdeckung. Die von der Glasabdeckung des Gehäuses und dem Absorber eingeschlossene Luftschicht dient als transparente Wärmedämmung in Richtung der einfallenden Sonnenstrahlung. Eine unter dem Absorber angebrachte Dämmschicht verhindert Wärmeverluste über dem Gehäuseboden. Das unterhalb des Absorberplatte angeordnete Rohrsystem besteht regelmäßig aus einem mäanderförmig geführten, druckfesten Kupferrohr, das jeweils endseitig an einer Sammelleitung angeschlossen ist, um mehrere Kollektoren miteinander zu verbinden.

Die Wärmeübertragung zwischen der Absorberplatte und dem Absorberrohr erfolgt über eine linienförmige Schweißnaht zwischen der Oberseite des Absorberrohrs und der Absorberplatte. Die Wärmeübertragung über die linienförmige Schweißnaht ist nicht optimal. Aus diesem Grund hat die Firma Solvis GmbH eine breite Lötverbindung zwischen der Absorberplatte und dem Absorberrohr entwickelt, die eine verbesserte Wärmeübertragung bewirken soll. Die Lötverbindung erstreckt sich über einen Teilkreis an der Oberseite des Absorberrohrs; die Lötverbindung wird hergestellt, in dem der Zwickel zwischen dem Rohrmantel und der Unterseite des Absorbers mit Lot aufgefüllt wird.

Neben den höheren Kosten dieser Verbindung ist die Wärmeübertragung zwischen Absorberplatte und Absorberrohr nach wie vor nicht optimal. Nachteilig sind außerdem die ohnehin hohen Herstellungskosten herkömmlicher Kollektoren, die maßgeblich durch die aufwendigen Absorber bedingt sind.

Aus der US 4,089,324 ist ein gattungsgemäßer Absorber einer Solaranlage mit einem Rohrsystem für einen Wärmeträger bekannt, bei dem zwischen zwei aufeinanderliegenden, den Absorber bildenden Blechen das Rohrsystem angeordnet ist, wobei in eines der Bleche der Verlauf des Rohrsystems eingebracht ist und die Bleche mittels eines klebstoffes miteinander verbunden sind.

Die DE 195 46 100 A1 sowie die US 4,299,202 offenbaren Absorber für einen Sonnenkollektor, deren übereinanderliegende, den Absorber bildende Bleche an den Berührflächen miteinander verklebt sind.

Ausgehend von diesem Stand der Technik liegt der Erfindung die Aufgabe zugrunde, einen Absorber mit reduzierten Herstellungskosten und verbesserter Maßhaltigkeit bei gleichzeitig verringerter Ausschussrate zu schaffen, bei dem bei hohen Temperaturen auftretende Festigkeitsverluste der Verbindung zwischen den Blechen des Absorbers kompensiert werden. Des Weiteren liegt der Erfindung die Aufgabe zugrunde, ein Verfahren zur Herstellung des verbesserten Absorbers vorzuschlagen.

Diese Aufgabe wird bei einem Absorber der eingangs erwähnten Art dadurch gelöst, dass die Bleche zusätzlich formschlüssig mittels Durchsetzfügen miteinander verbunden sind.

Indem in mindestens eines, vorzugsweise beide Bleche des Absorberflügels der Verlauf des Rohrsystems eingebracht ist, steht eine wesentlich größere Übertragungsfläche für die eingestrahlte Wärme zur Verfügung.

Die Bleche sind mittels eines Klebstoffes sowie zusätzlich formschlüssig miteinander verbunden.

Das Fügen der Bleche durch einen Klebstoff reduziert erheblich die Herstellungskosten, da Löt- oder Schweißarbeiten zur Herstellung des Absorbers vollständig entfallen können.

Das Fügen der Bleche durch einen Klebstoff führt nicht nur zu einer erheblichen Kostenreduktion, sondern verbessert darüber hinaus die Maßhaltigkeit des Sonnenkollektors bei gleichzeitig verringerter Ausschussrate. Der Energie-Einsatz ist beim Verkleben gegenüber den bisherigen Verbindungstechniken erheblich reduziert.

Als Klebstoff kommt bevorzugt ein Klebstoff aus der Gruppe der Silikone, Epoxid- oder Phenolharz-Klebstoffe zum Einsatz. Insbesondere wärmehärtende Klebstoffe auf der Basis modifizierter Epoxydharze weisen eine hohe Zeitstandfestigkeit gegen wechselnde Temperaturen auf. Des Weiteren weisen diese Klebstoffe günstige Verarbeitungsbedingungen sowie Festigkeits- und Beständigkeitseigenschaften für Metall/Metallverbindungen auf.

Wie bereits eingangs erwähnt, findet in dem Solarkreislauf unter bestimmten Betriebsumständen keine Umwälzung des Wärmeträgers statt. In diesem Fall können bei entsprechender Sonneneinstrahlung im Absorber Temperaturen von 200°C - 220° C auftreten. Um die bei diesen Temperaturen auftretenden Festigkeitsverluste der Klebeverbindung zu kompensieren, sind die beiden Bleche des Absorberflügels zusätzlich formschlüssig miteinander verbunden. Als bevorzugte zusätzliche Verbindung haben sich mehrere Toxpunkte zwischen den Blechen herausgestellt. Die Toxpunkte werden durch Durchsetzfügen (Clinchen) der beiden Bleche hergestellt. Diese Verbindung kann besonders einfach automatisiert und daher kostengünstig hergestellt werden.

Insbesondere mit dem Stillstand des Wärmekreislaufs geht eine Verdampfung des Wärmeträgers einher. Dies hat insbesondere bei Einsatz des üblichen Wasser-Glykol-Gemisches eine erhöhte Korrosion oder Oxidation an den Innenwänden des Rohrsystems zur Folge.

Um eine ausreichende Standfestigkeit der Absorber zu gewährleisten, sind die Bleche zumindest in dem die Innenflächen des Rohrsystems bildenden Bereich mit einer korrosions- und/oder oxidationshemmenden Beschichtung versehen. Vorzugsweise werden die Bleche jedoch vollständig und beidseitig beschichtet. Aluminiumbleche werden vorzugsweise eloxiert, während Stahlbleche insbesondere mit eine Kupfer - oder- Kunststoff-Beschichtung versehen sind. Die Beschichtung gewährleistet die gewünschte Langlebigkeit der Sonnenkollektoren.

Aus einem Prospekt der Fa. SHOWA ALUMINIUM CORPORATION, Osaka, Japan - 1993 ist ein sogenanntes Roll-Bond Verfahren zum Herstellen von Verdampferplatten bekannt, bei dem aufeinanderliegende Bleche durch Heißwalzen miteinander verschweißt und anschließend auf Enddicke kalt ausgewalzt werden. Die durch das im Siebdruckverfahren aufgetragene Trennmittel von der Verschweißung ausgenommenen Kanalbereiche werden mit Druckluft aufgeblasen, bevor die Bleche in die einzelnen Verdampferplatten unterteilt werden. Nachteilig bei diesem Verfahren ist die Blechdickenänderung beim Heißwalzen und in dem nachgeordneten Kaltwalzschritt, da sie unmittelbar zu entsprechenden Blechlängenänderungen führen. Hieraus resultieren Probleme, die in nachfolgenden Arbeitsschritten zu einem hohen Ausschuss führen. Die Verdampfer müssen aus Reinaluminium (Al 99,5) hergestellt werden, um das Einbringen der Kanäle zu ermöglichen.

Der erfindungsgemäße Absorber muss jedoch nicht notwendigerweise aus Reinaluminium bestehen und soll dennoch einfach in großer Stückzahl herstellbar sein. Außerdem soll im Interesse einer Kostenreduzierung ein Verfahren zur Serienfertigung von Absorbern mit geringem Ausschuss vorgeschlagen werden, dass wenig Energie benötigt und hinsichtlich der Gestaltung des Rohrsystems einen großen Gestaltungsspielraum eröffnet. Diese Anforderungen erfüllt das bekannte Roll-Bond Verfahren nicht, so dass es zur Herstellung der Absorber von Kollektoren für Solaranlagen weniger geeignet ist.

Erfindungsgemäß werden die den Absorber bildenden Bleche mittels eines Klebstoffes miteinander verbunden. Als Klebstoffe kommen insbesondere Einkomponenten- oder Zweikomponenten-Klebstoffe zum Einsatz, die beständig gegen den Wärmeträger sind und zumindest im Temperaturbereich zwischen - 30° C und + 200° C ihre Klebeeigenschaften beibehalten.

Der Klebstoff wird in bevorzugter Ausgestaltung des erfindungsgemäßen Herstellungsverfahrens nicht erst nach der Formgebung des Rohrsystems aufgetragen, sondern bereits auf dem insbesondere bandförmigen Ausgangsmaterial der Absorber. Derart beschichtete Bänder können wie unbeschichtete zum Coil gewickelt werden, ohne miteinander zu verkleben, wenn es ich um temperaturabhängige Hot-melt-Klebstoffe handelt. Die Klebwirkung setzt erst nach Erwärmen auf eine bestimmte Temperatur ein.

Das Fügen der Bleche durch einen Klebstoff erlaubt den Einsatz von Blechen mit Enddicke und Endfestigkeit, was sich vorteilhaft auf die Maßhaltigkeit der Absorber bei gleichzeitig verringerter Ausschussrate auswirkt. Der Energie-Einsatz ist beim Verkleben gegenüber üblichen Verbindungstechniken, wie Löten oder Schweißen erheblich reduziert. Zum flächigen Aufbringen auf die Fügeflächen kann der Klebstoff mit Walzen aufgerollt oder mit einem rakel- oder spachtelähnlichen Werkzeug aufgestrichen werden. Alternativ zum flächigen Auftragen kann der Klebstoff auch in Bahnen aufgespritzt werden, wobei die Menge so dosiert wird, dass nach dem Fügen der zu verklebenden Bleche kein überschüssiger Kleber in das Rohrsystem eindringt.

Der Verlauf des Rohrsystems wird im Wege des Kalt-Umformens, insbesondere durch Tiefziehen oder Prägen, eingebracht, wodurch sich eine hohe Querschnittswiederholgenauigkeit sowie eine flexible Anordnung der Wärmeträgerrohre in den aufeinanderliegenden Blechen der Absorber, wahlweise einseitig, beidseitig oder wechselseitig erreichen lässt.

Das Einbringen des Rohrsystems durch Tiefziehen oder Prägen ermöglicht den Einsatz von Aluminiumlegierungen bei der Herstellung von Absorbern anstelle des bisher verwendeten Reinaluminiums. Geeignete Aluminiumlegierungen sind beispielsweise die nachfolgend genannten Aluminium-Knetlegierungen:
Al Mg 3
Al Mg Si 1 oder
Al Cu Mg 1.

In vorteilhafter Ausgestaltung der Erfindung werden zumindest die zu verklebenden Flächen der Bleche einer Oberflächenbehandlung unterzogen. Kommen Aluminiumbleche zum Einsatz, empfiehlt sich eine Eloxal-Beschichtung, die durch anodische Oxidation des Aluminiumblechs erzeugt wird. Für Stahlbleche kann eine Kupfer- oder Kunststoffbeschichtung als Korrosionsschutz aufgebracht werden. Zusätzlich oder alternativ können weitere mechanische und / oder thermische Oberflächenbehandlungen der zu verklebenden Flächen durchgeführt werden. Mechanische Oberflächenbehandlungen (z.B. Bürsten) entfernen Verschmutzungen und rauen die Oberfläche auf, was sich bei bestimmten Klebstoffen vorteilhaft auf die Festigkeit der Klebeverbindung auswirken kann. Die thermische Oberflächenbehandlung entfettet die Oberfläche.

Die zusammengefügten und auf Absorbergröße geschnitten Bleche werden zusätzlich formschlüssig miteinander verbunden. Diese zusätzliche Verbindung fixiert die Bleche bis zum Erreichen einer Mindestaushärtung des Klebers und entlastet die Klebverbindung im Betrieb des Kollektors bei hohen Temperaturen des Wärmeträgers. Hierzu werden an mehreren auf der Absorberfläche gleichmäßig verteilten Stellen mittels Durchsetzfügen (Clinchen/Toxen) in der Absorberebene wirksame formschlüssige Verbindungen erzeugt, die die für die Kleberaushärtung und die Stabilisierung des Absorbers unter sämtlichen Betriebsbedingungen erforderliche Fixierung der Bleche aufrechterhält. Die auf diese Weise fixierten Absorber können die Presse für den Fügevorgang sofort wieder verlassen und falls erforderlich einen Aushärteofen durchlaufen oder unter normalen Umgebungsbedingungen bis zur geforderten Kleberendfestigkeit aushärten.

Je nach verwendetem Kleber kann es erforderlich sein, dass die derart mechanisch fixierten Bleche zusätzlich aufeinander gepresst und/oder erwärmt werden. Hierzu werden die Platten mit elastischen Zwischenlagen zu einem Stapel aufeinander gelegt, um dann unter dem Druck einer Presse und/oder gleichzeitiger Temperatureinwirkung die geforderte Zeit auszuhärten.

Nach abgeschlossener Aushärtung schließen sich eine etwaige Nachbearbeitung, wie beispielsweise Stanzen, Biegen, Bördeln und Lackieren an.

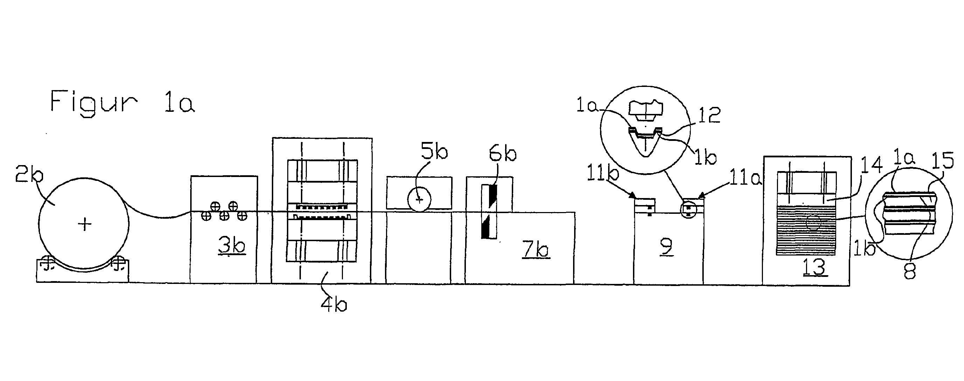

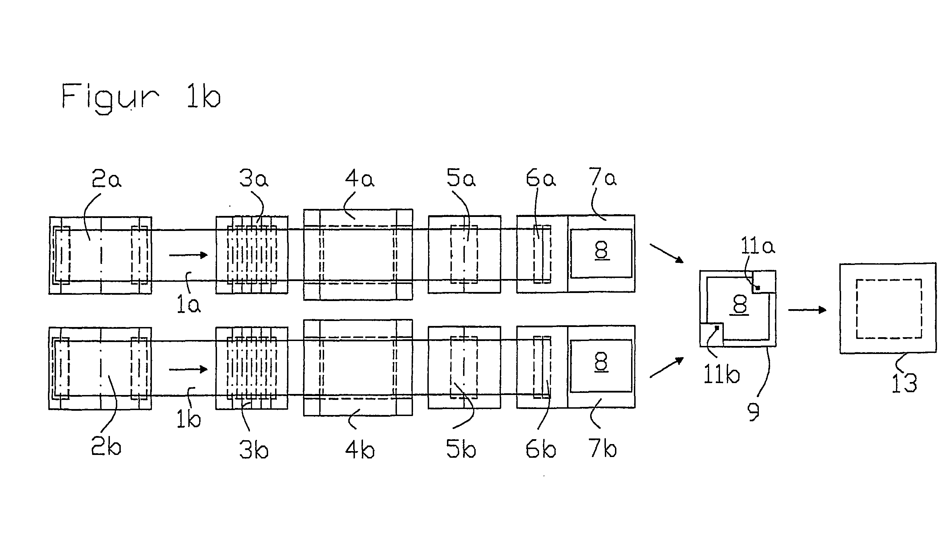

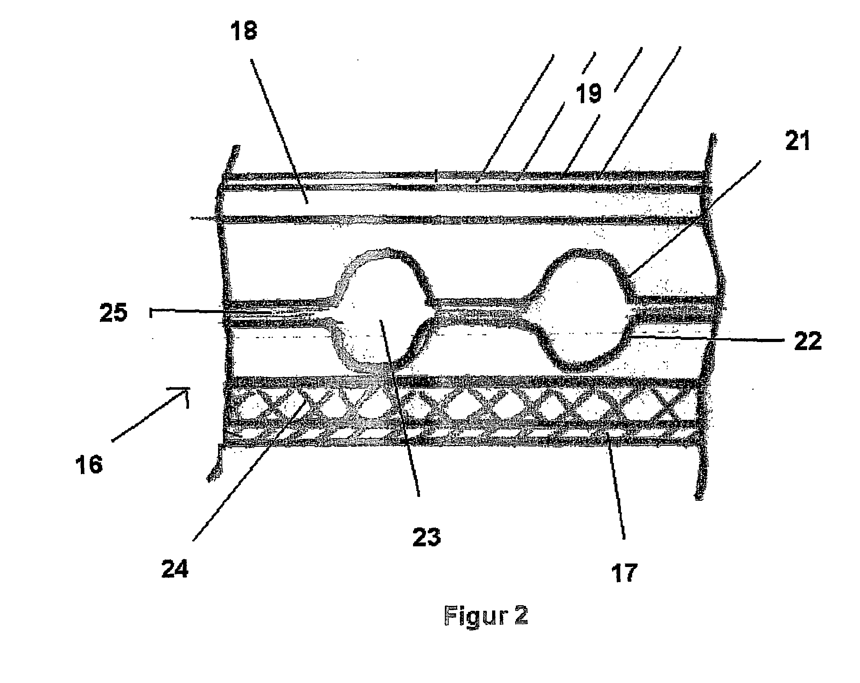

In den Figuren 1a, 1b ist beispielhaft eine Fertigungsstraße zur Herstellung eines erfindungsgemäßen Absorbers in einer Seitenansicht und einer Draufsicht dargestellt. Figur 2 zeigt einen schematisierten Schnitt durch einen Kollektor mit erfindungsgemäßen Absorber:

Das Ausführungsbeispiel zeigt eine 2-adrige Fertigungsstraße, in der parallel zwei Bleche 1a, 1b bearbeitet werden. Die jeweils von einem Coil 2a, 2b abgehaspelten bandförmigen Bleche 1a, 1b werden nach dem Richten in jeweils einer Rollenrichtmaschine 3a, 3b Prägestationen 4a, 4b zugeführt, die den Verlauf für das Rohrsystem durch Prägen in beide Bleche einbringen. Sollen die Absorberrohre nur einseitig eingeprägt werden, kann eine der Prägestationen 4a oder 4b entfallen; in diese Fall wird ein ebenes Blech mit einem geprägten Blech zusammengefügt.

Anschließend erfolgt der Kleberauftrag in beiden Strängen mit jeweils einer oberhalb des Bandlaufs angeordneten Walze 5a, 5b. Erst nach dem Aufrollen des Klebers werden die bandförmigen Bleche 1a, 1b mit Scheren 6a, 6b in Schneidstationen 7a, 7b auf die Größe der herzustellenden Absorber 8 abgelängt.

Anschließend werden die in den beiden parallel angeordneten Fertigungsstraßen hergestellten und auf Größe der Absorber abgelängten Bleche 1a, 1b in einem Presswerkzeug 9 zusammengebracht und mindestens an zwei Stellen 11a, 11b mittels Durchsetzfügen (Clinchen/Toxen) in einer in der Blechebene wirksamen formschlüssigen Verbindung 12 in ihrer Position zueinander fixiert.

Die so fixierten Absorber verlassen das Presswerkzeug 9 sofort wieder und gelangen in eine Aushärtestation 13 in der sie unter dem Druck einer Presse 14 und gleichzeitiger Temperatureinwirkung chargenweise bis zur geforderten Klebstoffendfestigkeit aushärten. Zwischen den aushärtenden Absorbern 8 befinden sich elastische Zwischenlagen 15, die eine Beschädigung der beidseitig ausgeprägten Absorberrohre in der Aushärtestation 13 verhindern. Wenn die Kapazität der Aushärtestation 13 nicht sämtliche aus den beiden Coils 2a, 2b herstellbaren Absorber 8 aufnehmen kann, können zur Sicherung eines kontinuierlichen Produktionsflusses mehrere Aushärtestationen vorgesehen sein.

Der Transport der Bleche 1a, 1b zwischen den Schneidstationen 7a, 7b, dem Presswerkzeug 9 und der Aushärtestation 13 erfolgt vorteilhafterweise automatisch, beispielsweise mittels in den Figuren aus Gründen der Übersichtlichkeit nicht dargestellten Fördermitteln und getakteten Greif- und Hebeeinrichtungen.

Der prinzipielle Aufbau des mit der Fertigungsstrasse nach den Figur 1 hergestellten Absorbers ergibt sich aus der Schnittdarstellung eines Kollektors nach Figur 2.

Der insgesamt mit 16 bezeichnete Flachkollektor besteht aus einem wetterfesten Gehäuse 17 mit einer Glasabdeckung 18, durch die die Sonnenstrahlung 19 auf die Oberfläche 21 des Absorbers 22 fällt. Die vorzugsweise dunkel eingefärbte Oberfläche 21 wandelt die einfallende Sonnenstrahlung 19 größtenteils in Wärme um, die über das in den Absorber 22 integrierte Rohrsystem 23 abfließt, von dem lediglich zwei Absorberrohre im Querschnitt dargestellt sind. Der Verlauf der Absorberrohre ist durch Kaltumformen in die über eine Klebschicht 25 miteinander verbundenen Bleche eingebracht. In den Absorberrohren zirkuliert der Wärmeträger, ein frostsicheres Wasser-Glykol-Gemisch.

Eine unter dem Absorber angeordnete Dämmschicht 24 verhindert Wärmeverluste über den Boden des Gehäuses 17, während die von der Glasabdeckung 18 und dem Absorber 22 eingeschlossene Luftschicht als strahlungsdurchlässige Wärmedämmung an der Oberseite des Absorbers wirkt.

### Bezugszeichenliste

| **Nr.** | **Bezeichnung** |
|---|---|
| 1.a, b | Bleche |
| 2.a, b | Coil |
| 3.a, b | Rollenrichtmaschine |
| 4.a, b | Prägestation |
| 5.a, b | Walze |
| 6.a, b | Scherlen |
| 7.a, b | Schneidstationen |
| 8. | Absorber |
| 9. | Presswerkzeug |
| 10. | --------- |
| 11.a, b | Stellen |
| 12. | formschlüssige Verbindung |
| 13. | Aushärtestation |
| 14. | Presse |
| 15. | elastische Zwischenlager |
| 16 | Flachkollektor |
| 17. | Gehäuse |
| 18. | Glasabdeckung |
| 19. | Sonnenstrahlung |
| 20. | -- |
| 21. | Oberfläche Kollektor |
| 22. | Absorber |
| 23. | Rohrsystem |
| 24. | Dämmschicht |
| 25. | Klebschicht |

## Patentansprüche

1. Absorber für einen thermischen Kollektor einer Solaranlage mit einem Absorberflügel für die Licht- und Wärmeumwandlung sowie einem Rohrsystem (23) für einen Wärmeträger, bei dem zwischen zwei aufeinanderliegenden, den Absorberflügel bildenden Blechen das Rohrsystem (23) angeordnet ist, wobei in mindestens eines der Bleche der Verlauf des Rohrsystems eingebracht ist und die Bleche Mittels eines Klebstoffes (25) miteinander verbunden sind, **dadurch gekennzeichnet, dass** die Bleche zusätzlich formschlüssig (11 a,b/12) mittels Durchsetzfügen miteinander verbunden sind.

2. Absorber nach Anspruch 1, **dadurch gekennzeichnet, dass** die zusätzliche Verbindung (11 a,b/12) zwischen den Blechen aus mehreren Toxpunkten besteht.

3. Absorber nach einem der Ansprüche 1 oder 2, **dadurch gekennzeichnet, dass** der Klebstoff (25) mindestens bis 200 °C wärmebeständig und undurchlässig für den Dampf des Wärmeträgers ist.

4. Absorber nach Anspruch 3, **dadurch gekennzeichnet, dass** der Klebstoff ein Silikon- oder Epoxydharz - oder Phenolharz-Klebstoff ist.

5. Absorber nach einem der Ansprüche 1 bis 4, **dadurch gekennzeichnet, dass** zumindest die die Innenflächen des Rohrsystems (23) bildenden Bereiche der Bleche oberflächenbehandelt sind.

6. Absorber nach Anspruch 5, **dadurch gekennzeichnet, dass** die Bleche zumindest in dem die Innenflächen des Rohrsystems bildenden Bereich mit einer korrosions- und/oder oxidationshemmenden Beschichtung versehen sind.

7. Absorber nach einem der Ansprüche 1 bis 6, **dadurch gekennzeichnet, dass** der Werkstoff der Bleche (1a, 1b) eine Aluminiumlegierung oder Stahl oder Kupfer ist.

8. Absorber nach Anspruch 7, **dadurch gekennzeichnet, dass** die Aluminiumbleche eloxiert sind.

9. Absorber nach Anspruch 7, **dadurch gekennzeichnet, dass** die Stahlbleche mit eine Kupfer - oder- Kunststoff-Beschichtung versehen sind.

10. Absorber nach einem der Ansprüche 1 bis 9, **dadurch gekennzeichnet, dass** die Bleche (1a, 1b) ein kalt umgeformtes Rohrsystem (23) aufweisen.

11. Verfahren zum Herstellen von Absorbern nach den Ansprüchen 2 bis 10 aus zwei aufeinanderliegenden Blechen (1a, 1b), wobei in wenigstens eines der Bleche (1a) der Verlauf des Rohrsystems (25) für den Wärmeträger im Wege des Kaltumformens eingebracht wird, die beiden Bleche (1a, 1b) durch einen Klebstoff gefügt sowie an mehreren Stellen zusätzlich mittels Durchsetzfügen formschlüssig miteinander verbunden werden.

12. Verfahren zum Herstellen von Absorbern nach Anspruch 11, **dadurch gekennzeichnet, dass** zum Fügen ein Klebstoff verwendet wird, der beständig gegen den Wärmeträger ist und zumindest im Temperaturbereich zwischen - 30° C und + 200° C seine Klebeeigenschaften beibehält.

13. Verfahren zum Herstellen von Absorbern nach Anspruch 11 oder 12, **dadurch gekennzeichnet, dass** nach einem Richten der zu fügenden Bleche (1a, 1b) der Verlauf des Rohrsystems für den Wärmeträger in wenigstens eines der beiden Bleche (1a) eingebracht wird.

14. Verfahren zum Herstellen von Absorbern nach einem der Ansprüche 11 bis 13, **dadurch gekennzeichnet, dass** der Verlauf des Rohrsystems für den Wärmeträger durch Prägen oder Tiefziehen eingebracht wird.

15. Verfahren zum Herstellen von Absorbern nach einem der Ansprüche 11 bis 14, **dadurch gekennzeichnet, dass** die Bleche (1a, 1b) vor oder nach dem Auftragen des Klebstoffs auf Absorbergröße geschnitten werden.

16. Verfahren zum Herstellen von Absorbern nach einem der Ansprüche 11 bis 15, **dadurch gekennzeichnet, dass** auf beide Bleche (1a, 1b) ein temperaturabhängiger Klebstoff aufgebracht wird, wobei die Klebwirkung des temperaturabhängigen Klebstoffs erst nach Erwärmen auf eine definierte Temperatur einsetzt.

17. Verfahren zum Herstellen von Absorbern nach einem der Ansprüche 11 bis 16, **dadurch gekennzeichnet, dass** zumindest die zu verklebenden Flächen der Bleche (1a, 1b) einer mechanischen und / oder thermischen und/oder chemischen Oberflächenbehandlung unterzogen werden.

18. Thermischer Kollektor für eine Solaranlage mit einem Absorber nach einem oder mehreren der Ansprüche 1 bis 10.

## Claims

1. An absorber for a thermal collector of a solar facility with an absorber panel for the conversion of light and heat as well as a tubing system (23) for a heat transfer medium, in which the tubing system (23) is arranged between two sheets lying one upon the other forming the absorber panel, wherein
the path of the tubing system is introduced in at least one of the sheets and the sheets are connected with each other by means of an adhesive (25),
**characterised in that** the plates are additionally connected with one another in a form fit joint (11 a,b/12) by means of clinching.

2. The absorber according to claim 1,
**characterized in that** the additional connection (11 a,b/12) between the plates consists of a plurality of Tox points.

3. The absorber according to one of the Claims 1 to 2,
**characterised in that** the adhesive (25) is heat resistant to at least 200 °C and is impermeable to the vapour of the heat transfer medium.

4. The absorber according to Claim 3,
**characterised in that** the adhesive is a silicone, epoxy or phenolic resin adhesive.

5. The absorber according to one of the Claims 1 to 4,
**characterised in that** at least the regions of the plates forming the internal surfaces of the tubing system (23) are surface treated.

6. The absorber according to Claim 5,
**characterised in that** the plates at least in the region forming the inner surfaces of the tubing system are provided with a corrosion and/or oxidation-retarding coating.

7. The absorber according to one of the Claims 1 to 6,
**characterised in that** the material of the plates (1a, 1b) is an aluminium alloy or steel or copper.

8. The absorber according to Claim 7,
**characterised in that** the aluminium plates are anodised.

9. The absorber according to Claim 7,
**characterised in that** the steel plates are provided with a copper or plastic coating.

10. The absorber according to one of the Claims 1 to 9,
**characterised in that** the plates (1a, 1b) have a cold formed tubing system (23).

11. A method for the manufacture of absorbers according to the Claims 2 to 10 from two plates (1a, 1b) lying one upon another, wherein
in at least one of the plates (1a) the path of the tubing system (25) for the heat transfer medium is introduced in the course of cold forming, the two plates are joined by means of an adhesive, and at a plurality of sites are additionally connected with one another in a form fit joint by means of clinching.

12. The method for the manufacture of absorbers according to Claim 11,
**characterised in that** an adhesive is used for the joining process that is resistant to the heat transfer medium and maintains its adhesive properties, at least in the temperature range between - 30°C and + 200°C.

13. The method for the manufacture of absorbers according to Claim 11 or 12,
**characterised in that** after a straightening of the plates (1a, 1b) to be joined, the path of the tubing system for the heat transfer medium is introduced into at least one of the two plates (1a).

14. The method for the manufacture of absorbers according to one of the Claims 11 to 13,
**characterised in that** the path of the tubing system for the heat transfer medium is introduced by stamping or deep drawing.

15. The method for the manufacture of absorbers according to one of the Claims 11 to 14,
**characterised in that** the plates (1a, 1b) are cut to the absorber size before or after the application of the adhesive.

16. The method for the manufacture of absorbers according to one of the Claims 11 to 15,
**characterised in that** a temperature-dependent adhesive is applied to both plates (1a, 1b), wherein
the adhesive effect of the temperature-dependent adhesive comes into play only after the adhesive has been heated up to a defined temperature.

17. The method for the manufacture of absorbers according to one of the Claims 11 to 16,
**characterised in that** at least the surfaces of the plates (1a, 1b) that are to be stuck together are subjected to a mechanical and/or thermal and/or chemical surface treatment.

18. A thermal collector for a solar plant with an absorber according to one or a plurality of the Claims 1 to 10.

## Revendications

1. Absorbeur pour un collecteur thermique d'une installation solaire avec une aile d'absorbeur pour la transformation de chaleur et de lumière ainsi qu'un système de tuyau (23) pour un fluide caloporteur, le système de tuyau (23) étant disposé entre deux tôles superposées formant l'aile d'absorption, le cheminement du système de tuyaux étant incorporé dans au moins l'une des tôles et les tôles étant reliées au moyen d'une colle (25), **caractérisé en ce que** les tôles sont reliées entre elles en supplément par complémentarités des formes (11 a,b/12) par sertissage.

2. Absorbeur selon la revendication 1, **caractérisé en ce que** la connexion supplémentaire (11 a,b/12) se compose de plusieurs points de toxage entre les tôles.

3. Absorbeur selon l'une des revendications 1 ou 2, **caractérisé en ce que** la colle (25) est résistante à une température atteignant au moins 200°C et est imperméable à la vapeur du fluide caloporteur.

4. Absorbeur selon la revendication 3, **caractérisé en ce que** la colle est une colle à base de silicone ou de résine époxy ou de résine phénolique.

5. Absorbeur selon l'une des revendications 1 à 4, **caractérisé en ce qu'**au moins les zones des tôles formant les surfaces internes du système de tuyaux (23) subissent un traitement de surface.

6. Absorbeur selon la revendication 5, **caractérisé en ce que** les tôles sont munies au moins dans la zone formant les surfaces internes du système de tuyaux d'un revêtement anticorrosif et antioxydant.

7. Absorbeur selon l'une des revendications 1 à 6, **caractérisé en ce que** le matériau des tôles (1a, 1b) est un alliage d'aluminium, de l'acier ou du cuivre.

8. Absorbeur selon la revendication 7, **caractérisé en ce que** les tôles d'aluminium sont anodisées.

9. Absorbeur selon la revendication 7, **caractérisé en ce que** les tôles d'acier sont munies d'un revêtement en cuivre ou en matière synthétique.

10. Absorbeur selon l'une des revendications 1 à 9, **caractérisé en ce que** les tôles (1a, 1b) présentent un système de tuyaux (23) réalisé au formage à froid.

11. Procédé pour la fabrication d'absorbeurs selon les revendications 2 à 10 à partir de deux tôles superposées (1a, 1b), dans au moins l'une des tôles (1a), le cheminement du système de tuyaux (25) pour le fluide caloporteur étant incorporé au cours du processus de formage à froid, les deux tôles (1a, 1b) étant assemblées par une colle ainsi que reliées par complémentarité de formes à plusieurs points en supplément par sertissage.

12. Procédé pour la fabrication d'absorbeurs selon la revendication 11, **caractérisé en ce que** pour l'assemblage, il est utilisé une colle qui est résistante au fluide caloporteur et qui conserve, au moins dans la plage de températures comprises entre - 30° C et +200°C, ses propriétés d'adhésion.

13. Procédé pour la fabrication d'absorbeurs selon la revendication 11 ou 12, **caractérisé en ce qu'**après un dressage des tôles à assembler (1a, 1b), le cheminement du système de tuyaux pour le caloporteur est incorporé dans au moins l'une des deux tôles (1a).

14. Procédé pour la fabrication d'absorbeurs selon l'une des revendications 11 à 13, **caractérisé en ce que** le cheminement du système de tuyaux pour le fluide caloporteur est incorporé par estampage ou emboutissage profond.

15. Procédé pour la fabrication d'absorbeurs selon l'une des revendications 11 à 14, **caractérisé en ce que** les tôles (1a, 1b) sont découpées avant ou après l'application de la colle à la dimension des absorbeurs.

16. Procédé pour la fabrication d'absorbeurs selon l'une des revendications 11 à 15, **caractérisé en ce qu'**il est appliqué sur les deux tôles (1a, 1b) une colle en fonction des températures, l'effet d'adhésion de la colle en fonction des températures ne se déclenchement qu'après réchauffement à une température définie.

17. Procédé pour la fabrication d'absorbeurs selon l'une des revendications 11 à 16, **caractérisé en ce qu'**au moins les surfaces à coller des tôles (1a, 1b) sont soumises à un traitement de surface mécanique et/ou thermique et/ou chimique.

18. Collecteur thermique pour une installation solaire avec un absorbeur selon l'une des revendications 1 à 10.
